# EUROPEAN PATENT SPECIFICATION

(11) **EP 3 670 549 B1**
(45) Date of publication and mention of the grant of the patent: **12.07.2023**
(21) Application number: 19793477.1
(22) Date of filing: 05.03.2019
(51) Int. Cl.: C08F 220/18, C08F 220/14, C09D 11/107, C08F 2/30, C09D 11/023

(54) **NANOSCALE WATER-BASED NARROW-MOLECULAR-WEIGHT DISTRIBUTION ACRYLIC COPOLYESTER AND PREPARATION THEREFOR**
NANOSKALIGES WASSERBASIERTES ACRYL-COPOLYESTER MIT ENGER MOLEKULARGEWICHTSVERTEILUNG UND HERSTELLUNG DAVON
COPOLYESTER ACRYLIQUE À DISTRIBUTION ÉTROITE DE POIDS MOLÉCULAIRES À BASE D'EAU NANOMÉTRIQUE ET SA PRÉPARATION

(30) Priority: 28.04.2018 CN 201810400560
(43) Date of publication of application: 24.06.2020
(73) Proprietor: Shanghai Xianke Chemical Co., Ltd., Shanghai 201417 (CN)
(72) Inventor: ZHANG, Yuan, Shanghai 201417 (CN); ZHANG, Yijun, Shanghai, 201417 (CN)
(74) Representative: Wohlfahrt, Jan Günther
(86) International application number: PCT/CN2019/076911
(87) International publication number: WO 2019/205809

(56) References cited:
- CN-A- 105 694 772
- CN-A- 108 559 018
- CN-B- 103 554 341
- JP-A- 2003 192 981
- US-A- 4 039 500
- US-A1- 2004 236 005

## Description

### Technical Field

The present invention relates to the field of chemical engineering and, in particular, to a nanoscale, water-based, narrow molecular weight distribution copolyacrylate and a method of preparing it.

### Background

In order to reduce the use of volatile organic compound (VOC) substances, water-based resins obtained by performing resin modification or salification, fine particle size emulsification and other processes on raw materials such as polyurethane, epoxy resins, water-soluble acrylic acid are mainly used in resin-related industries both in China and abroad. However, the polymerization of waterborne resins such as polyurethane and epoxy resins deems that only waterborne modification is acceptable to them. Although the modification of such waterborne resins can reduce the use of VOCs and other toxic and hazardous substances, it cannot completely get rid of these volatile organic substances. Therefore, the production of existing waterborne resins still involves VOC emissions, posing a threat to environmental safety.

Traditional resins used as basic industrial materials have low solid contents and high viscosities, and the production of acrylate resins and preparation of resin-containing products from these resins both require the addition of great amounts of organic additives (VOC-containing substances) for imparting functions required by their intended use, such as lowering the viscosity of a system. This may lead to much VOC exposure, adding difficulties to environmental governance. Further, the traditional approach often employed by the domestic water-based resin industry to impart desired properties (e.g., adhesion, etc.) to acrylate resins by cross-linking with hydroxyacrylamide has been banned by the EU countries.

US 2004/0236005 A1 discloses an emulsion polymer having a solids content of 39.5%, a pH of 7.0, a viscosity of 12 mPa·s, and an average particle size of 104nm prepared from methacrylic acid, water, methyl methacrylate, butyl acrylate, initiatior and emulsifier.

CN 103 554 341 B discloses an emulsion polymer having solids content of 40%-50%, pH of 7-9, average particle size of 100-250nm prepared from water, methacrylic acid, methyl methacrylate, butyl acrylate, initiatior and emulsifier.

Therefore, there is an urgent need to develop a novel acrylate resin to overcome the technical deficiencies of the prior art.

### Summary

It is a first object of the present invention to propose a nanoscale, water-based, narrow molecular weight distribution copolyacrylate not requiring the addition of organic additives in its production as well as in its subsequent use and thus having zero VOC emission and significant environmental friendliness.

In order to attain the above object, subject-matter of the present invention lies in:
a nanoscale, water-based, narrow molecular weight distribution copolyacrylate, wherein materials from which the copolyacrylate is synthesized include methyl methacrylate, methacrylic acid and butyl acrylate as base monomers, and wherein the nanoscale, water-based, narrow molecular weight distribution copolyacrylate is prepared by polymerization of the base monomers under the action of an emulsifier and an initiator in a purely water-based system;
and wherein the nanoscale, water-based, narrow molecular weight distribution copolyacrylate has a D50 particle size of 40-65 nm and a polydispersity index (PDI) (Mw/Mn) of <1.05, wherein the D50 particle size and the polydispersity index (PDI) (Mw/Mn) are determined by Malvern laser particle size analyzer and zeta potential analyzer;
and wherein the nanoscale, water-based, narrow molecular weight distribution copolyacrylate is prepared by compositions of materials below through the following steps:
wherein, the materials from which the nanoscale, water-based, narrow molecular weight distribution copolyacrylate is synthesized include, by weight percentage:

| | |
|---|---|
| methyl methacrylate | 12-25%; |
| methacrylic acid | 1.5-5%; |
| butyl acrylate | 12-25%; |
| emulsifier | 1.5-2.5%; |
| initiator | 0.03-0.15%; |
| water | 55.4-59.97%; |

wherein, the preparation comprising the steps of:
(A) adding an emulsifier in an amount equal to part of a prescribed amount for the emulsifier to water in an amount equal to an appropriate part of a prescribed amount for the water in a reactor, forming an aqueous solution of the emulsifier by stirring the mixture until the emulsifier is completely dissolved, heating the aqueous solution to 70-85°C and maintaining it at the temperature;
(B) successively adding the water in an amount equal to the remaining part of the prescribed amount for the water and an initiator in a prescribed amount for the initiator to a container and obtaining an aqueous solution of the initiator by stirring the mixture until the initiator is completely dissolved;
(C) homogeneously mixing base monomers added in respective prescribed amounts to a container, adding thereto the emulsifier in an amount equal to the remaining part of the prescribed amount for the emulsifier and obtaining a mixed monomer solution by slowly stirring the mixture until the base monomers are completely dissolved; and
(D) with stirring initiated in the reactor and a temperature therein maintained at 70-85°C, simultaneously adding the aqueous solution of the initiator from step (B) and the mixed monomer solution from step (C) to the reactor, stopping the stirring after the addition is completed, aging the reaction system for an appropriate period of time, cooling it, adjusting its pH to a desired value and filtering it, thus obtaining the nanoscale, water-based, narrow molecular weight distribution copolyacrylate;

wherein in step (A), the appropriate part of the prescribed amount for the water is 70-90% by weight and the amount equal to the part of the prescribed amount for the emulsifier is 45-55% by weight.

According to the present invention, a nanoscale, water-based, narrow molecular weight distribution copolyacrylate synthesized from materials including methyl methacrylate, methacrylic acid and butyl acrylate as base monomers. The nanoscale, water-based, narrow molecular weight distribution copolyacrylate is prepared by polymerization of the base monomers under the action of an emulsifier and an initiator in a purely water-based system, and the preparation includes the steps of:
(A) forming an aqueous solution of the emulsifier from the emulsifier in an amount equal to part of a prescribed amount for the emulsifier and from water;
(B) forming an aqueous solution of the initiator from the initiator in a prescribed amount for the initiator and from water;
(C) forming a mixed monomer solution from the base monomers in respective prescribed amounts and from the emulsifier in an amount equal to the remaining part of the prescribed amount for the emulsifier; and
(D) obtaining the nanoscale, water-based, narrow molecular weight distribution copolyacrylate from a reaction occurring upon simultaneous addition of the aqueous solution of the initiator from step (B) and the mixed monomer solution from step (C) into the aqueous solution of the emulsifier from step (A).

According to the present invention, the nanoscale, water-based, narrow molecular weight distribution copolyacrylate may assume the form of a block homopolymer. Here, the term "block homopolymer" is intended to mean that the copolyacrylate is constructed from blocks polymerized in an orderly and homogeneous manner.

According to the present invention, materials from which the nanoscale, water-based, narrow molecular weight distribution copolyacrylate is synthesized may include, by weight percentage:

| | |
|---|---|
| methyl methacrylate | 12-25%; |
| methacrylic acid | 1.5-5%; |
| butyl acrylate | 12-25%; |
| emulsifier | 1.5-2.5%; |
| initiator | 0.03-0.15%; |
| water | 55.4-59.97%. |

According to the present invention, the emulsifier may be an emulsifier commonly used in the synthesis of acrylate resins in the art. For example, it may be selected from sodium dodecyl sulfate, sodium octadecyl sulfate, AES and NP-10.

The initiator may be a water-soluble radical initiator commonly used in the synthesis of acrylate resins in the art. For example, it may be selected from persulfates such as ammonium persulfate, potassium persulfate, etc.

According to the present invention, the nanoscale, water-based, narrow molecular weight distribution copolyacrylate may be imparted with a function desired by a certain application. The function may be imparted by adding a corresponding functional monomer to the materials from which the copolyacrylate is synthesized. The functional monomer may be a heterocyclic ester or an ester with a long carbon chain. In other words, the materials from which the nanoscale, water-based, narrow molecular weight distribution copolyacrylate is synthesized may further include a heterocyclic ester or an ester with a long carbon chain as a functional monomer.

According to the present invention, in the case of the materials including a heterocyclic ester or an ester with a long carbon chain as a functional monomer, the heterocyclic ester may be present at a weight percentage less than 5%, and the ester with a long carbon chain may be present at a weight percentage less than 5%.

Additionally, the heterocyclic ester may be selected from one or more of isobornyl acrylate and isobornyl methacrylate, and the ester with a long carbon chain may be selected from one or more of phosphoric acid acrylate, dodecyl acrylate and octadecyl acrylate.

According to the present invention, the nanoscale, water-based, narrow molecular weight distribution copolyacrylate may have a D50 particle size of 40-65 nm and a polydispersity index (PDI) (Mw/Mn) of <1.05.

According to the present invention, the nanoscale, water-based, narrow molecular weight distribution copolyacrylate may have a solid content of >30 wt. %.

The solid content may lie in the range of 30-40 wt. %. Preferably, the solid content is in the range of 33.65-35.35 wt. %. The copolyacrylate may have a viscosity in the range of 10-50 cps, preferably 10-11.5 cps.

It is a second object of the present invention to provide a method of preparing a nanoscale, water-based, narrow molecular weight distribution copolyacrylate, comprising the steps of:
(A) adding an emulsifier in an amount equal to part of a prescribed amount for the emulsifier to water in an amount equal to an appropriate part of a prescribed amount for the water in a reactor, forming an aqueous solution of the emulsifier by stirring the mixture until the emulsifier is completely dissolved, heating the aqueous solution to 70-85 °C and maintaining it at the temperature;
(B) successively adding the water in an amount equal to the remaining part of the prescribed amount for the water and an initiator in a prescribed amount for the initiator to a container and obtaining an aqueous solution of the initiator by stirring the mixture until the initiator is completely dissolved;
(C) homogeneously mixing base monomers added in respective prescribed amounts to a container, adding thereto the emulsifier in an amount equal to the remaining part of the prescribed amount for the emulsifier and obtaining a mixed monomer solution by slowly stirring the mixture until the base monomers are completely dissolved; and
(D) with stirring initiated in the reactor and a temperature therein maintained at 70-85 °C, simultaneously adding the aqueous solution of the initiator from step (B) and the mixed monomer solution from step (C) to the reactor, stopping the stirring after the addition is completed, aging the reaction system for an appropriate period of time, cooling it, adjusting its pH to a desired value and filtering it, thus obtaining the nanoscale, water-based, narrow molecular weight distribution copolyacrylate,

wherein, the base monomers in step (C) include methyl methacrylate, methacrylic acid and butyl acrylate;
and wherein the nanoscale, water-based, narrow molecular weight distribution copolyacrylate has a D50 particle size of 40-65 nm and a polydispersity index (PDI) (Mw/Mn) of <1.05, wherein the D50 particle size and the polydispersity index (PDI) (Mw/Mn) are determined by Malvern laser particle size analyzer and zeta potential analzyer.

According to the present invention the method of preparing the nanoscale, water-based, narrow molecular weight distribution copolyacrylate as defined above, which includes the steps of:
(A) adding an emulsifier in an amount equal to part of a prescribed amount for the emulsifier to water in an amount equal to an appropriate part of a prescribed amount for the water in a reactor, forming an aqueous solution of the emulsifier by stirring the mixture until the emulsifier is completely dissolved, heating the aqueous solution to 70-85 °C and maintaining it at the temperature;
(B) successively adding the water in an amount equal to the remaining part of the prescribed amount for the water and an initiator in a prescribed amount for the initiator to a container and obtaining an aqueous solution of the initiator by stirring the mixture until the initiator is completely dissolved;
(C) homogeneously mixing the base monomers added in respective prescribed amounts to a container, adding thereto the emulsifier in an amount equal to the remaining part of the prescribed amount for the emulsifier and obtaining a mixed monomer solution by slowly stirring the mixture until the monomers are completely dissolved; and
(D) with stirring initiated in the reactor and a temperature therein maintained at 70-85 °C, simultaneously adding the aqueous solution of the initiator from step (B) and the mixed monomer solution from step (C) to the reactor, stopping the stirring after the addition is completed, aging the reaction system for an appropriate period of time, cooling it, adjusting its pH to a desired value and filtering it, thus obtaining the nanoscale, water-based, narrow molecular weight distribution copolyacrylate,
wherein, the base monomers in step (C) include methyl methacrylate, methacrylic acid and butyl acrylate.

According to the present invention, in step (A), the appropriate part of the prescribed amount for the water may be 70-90% by weight and the amount equal to the part of the prescribed amount for the emulsifier may be 45-55% by weight.

According to the present invention, in step (D), the appropriate aging period of time may be 2±0.5 hours.

According to the present invention, in step (D), the desired pH value may be 5-8.

It is a third object of the present invention to provide use of the nanoscale, water-based, narrow molecular weight distribution copolyacrylate as defined above as a water-based resin.

Additionally, the nanoscale, water-based, narrow molecular weight distribution copolyacrylate may be used in the preparation of a fully water-based ink.

Compared with the prior art, the subject-matter of the present invention has the following beneficial effects:
(1) The nanoscale, water-based, narrow molecular weight distribution copolyacrylate of the invention employs water as the sole dispersion medium, can be polymerized and stably present in a purely water-based system and features a nanoscale size and a narrow bandwidth, uniform distribution. Specifically, it has a D50 particle size of 40-65 nm on the nanoscale, structural consistency, a polydispersity index (PDI) (Mw/Mn) of < 1.05, a narrow particle size distribution and a normal molecular weight distribution. Therefore, the production of the nanoscale, water-based, narrow molecular weight distribution copolyacrylate of the invention does not involve VOC emissions, providing excellent benefits to environmental protection.
(2) It features a low viscosity and a solid content >30 wt. %, which allow the copolyacrylate of the present to be used in a system in a downstream application such as the production of a water-based ink without requiring the addition of organic solvents or additives for reducing the system' viscosity while still achieving comparable performance to that obtained by addition of such organic solvent or additives. Thus, the downstream application can achieve zero VOC emission.
(3) The nanoscale, water-based, narrow molecular weight distribution copolyacrylate is not water-absorbent, free of after-tack and highly water-resistant. Specifically, it is directly polymerized and dispersed in a purely water-based system and features stable presence in water and absolute hydrophobicity in a dehydrated form. Thus, it has good water-resistant performance. Since the copolyacrylate of the invention is polymerized in that way, it circumvents the moisture absorption caused after-tack problem found in acrylate resins prepared following the electric double layer (emulsification) theory or hydrated-ion (hydrophilic) theory. Since the resin can be dispersed in water directly, rather than by subsequent dispersion by emulsification or by subsequent dissolution and swelling with the aid of hydrophilic groups, it is not water-absorbent, free of after-tack and highly water-resistant.
(4) The copolyacrylate allows functional modifications while not compromising at all the characteristics of a nanoscale size and a narrow bandwidth, uniform molecular weight distribution.

Functional groups can impart properties such as resistance to oils, weather, acidic, alkaline or chemical corrosion, salt spray and ultraviolet light. When loaded with such functional groups during its polymerization, the copolyacrylate can meet the special requirements of different applications while not increasing the use of organic solvent or additives (VOC-related substances) and can thus find extremely extensive use.

### Brief Description of the Drawings

Fig. 1 shows an FTIR spectrum of a nanoscale, water-based, narrow molecular weight distribution copolyacrylate C30 according to Example 1.
Fig. 2 shows an FTIR spectrum of a nanoscale, water-based, narrow molecular weight distribution copolyacrylate C30 according to Example 2.
Fig. 3 shows an FTIR spectrum of a nanoscale, water-based, narrow molecular weight distribution copolyacrylate C30 according to Example 3.
Fig. 4 shows an FTIR spectrum of a nanoscale, water-based, narrow molecular weight distribution copolyacrylate C30IB-I according to Example 4.
Fig. 5 shows an FTIR spectrum of a nanoscale, water-based, narrow molecular weight distribution copolyacrylate C301590 according to Example 5.
Fig. 6 shows a molecular weight distribution of the nanoscale, water-based, narrow molecular weight distribution copolyacrylate C30 of Example 1.
Fig. 7 shows a molecular weight distribution of the nanoscale, water-based, narrow molecular weight distribution copolyacrylate C30 of Example 2.
Fig. 8 shows a molecular weight distribution of the nanoscale, water-based, narrow molecular weight distribution copolyacrylate C30 of Example 3.
Fig. 9 shows a molecular weight distribution of the nanoscale, water-based, narrow molecular weight distribution copolyacrylate C30IB-I of Example 4.
Fig. 10 shows a molecular weight distribution of the nanoscale, water-based, narrow molecular weight distribution copolyacrylate C301590 of Example 5.
Fig. 11 shows a DCS curve of the nanoscale, water-based, narrow molecular weight distribution copolyacrylate C30 of Example 1.
Fig. 12 shows a DCS curve of the nanoscale, water-based, narrow molecular weight distribution copolyacrylate C30 of Example 2.
Fig. 13 shows a DCS curve of the nanoscale, water-based, narrow molecular weight distribution copolyacrylate C30 of Example 3.
Fig. 14 shows a DCS curve of the nanoscale, water-based, narrow molecular weight distribution copolyacrylate C30IB-I of Example 4.
Fig. 15 shows a DCS curve of the nanoscale, water-based, narrow molecular weight distribution copolyacrylate C301590 of Example 5.
Fig. 16 shows a particle size distribution of a fully water-based ink according to the present invention.
Fig. 17 shows a particle size distribution of a waterborne color paste for ink use from American Color Inc.
Fig. 18 shows a cross-cut test setup for a fully water-based ink of Example 10.
Fig. 19 shows the fully water-based ink of Example 10 that has experienced a water boiling test.

### Detailed Description

The present invention will be described in greater detail below with reference to the following specific examples. It is to be understood that the following examples are presented merely for the purpose of illustrating the present invention rather than limiting the scope thereof.

All the materials used in the following examples are commercially available products.

### Compositions of Examples 1-5 are shown in Table 1.

**Table 1 Compositions of Examples 1-5**

| Materials | Methyl Methacrylate | Methacrylic Acid | Butyl Acrylate | Isobornyl Acrylate | Phosphoric Acid Acrylate | Emulsifier | Initiator | Water |
|---|---|---|---|---|---|---|---|---|
| Examples | Unit (g) | | | | | | | |
| Example 1 | 12 | 5 | 25 | 0 | 0 | 2.5 | 0.1 | 55.4 |
| Example 2 | 18 | 3 | 20 | 0 | 0 | 2.0 | 0.15 | 56.85 |
| Example 3 | 25 | 1.5 | 12 | 0 | 0 | 1.5 | 0.03 | 59.97 |
| Example 4 | 20 | 4 | 16 | 5 | 0 | 2.3 | 0.08 | 52.62 |
| Example 5 | 15 | 4.5 | 22 | 0 | 5 | 1.8 | 0.12 | 51.58 |

### Example 1 Preparation of Nanoscale, Water-based, Narrow Molecular Weight Distribution Copolyacrylate C30

A nanoscale, water-based, narrow molecular weight distribution copolyacrylate according to the present invention was prepared as follows:
(A) Sodium dodecyl sulfate as the emulsifier was dissolved in an amount equal to 50% by weight of the amount as specified in the corresponding composition given above in ultrapure water contained in a reactor in an amount equal to 90% by weight of the amount as specified in the corresponding composition given above. The mixture was stirred until complete dissolution of the sodium dodecyl sulfate was achieved, thus giving rise to an aqueous solution of the emulsifier, which was then heated to and kept at 80°C.
(B) Ammonium persulfate as the initiator was added in the amount as specified in the corresponding composition given above to water contained in a container in an amount equal to the remaining percentage of the amount as specified in the composition, and the mixture was stirred until the ammonium persulfate was completely dissolved, resulting in an aqueous solution of the initiator.
(C) Methyl methacrylate, methacrylic acid and butyl acrylate were added as base monomers into a container respectively in the amounts as specified in the corresponding composition given above and homogenized by stirring, followed by removal of polymerization inhibitors and addition of the emulsifier in an amount equal to the remaining 50% by weight of the amount as specified in the corresponding composition given above. The mixture was slowly stirred until the emulsifier and base monomers were completely dissolved so that a mixed monomer solution with adjusted phase boundaries was obtained.
(D) Stirring is initiated in the reactor and a temperature therein is kept at 80°C, followed by simultaneous addition of the aqueous solution of the initiator obtained from step (B) and the mixed monomer solution from step (C). The addition was controlled to be completed within a period of time of 90±5 minutes, and stirring was ceased subsequent to the completion of the addition. The reaction system was then aged for 2 hours, cooled to room temperature, adjusted to a pH of 6 and filtered, thereby obtaining the nanoscale, water-based, narrow molecular weight distribution copolyacrylate.

Since the copolyacrylate is to be used as a material for a downstream product, its desired pH may vary depending on the particular downstream product to which it is to be applied. The pH in step (D) may vary as required depending on a subsequent practical application of the copolyacrylate. That is, it may be adjusted to a desired value, typically within the range of 5-8.

### Example 2 Preparation of Nanoscale, Water-based, Narrow Molecular Weight Distribution Copolyacrylate C30

(A) Sodium octadecyl sulfate as the emulsifier was dissolved in an amount equal to 45% by weight of the amount as specified in the composition given above in ultrapure water contained in a reactor in an amount equal to 80% by weight of the amount as specified in the corresponding composition given above. The mixture was stirred until complete dissolution of the sodium octadecyl sulfate was achieved, thus giving rise to an aqueous solution of the emulsifier, which was then heated to and kept at 70°C.
(B) Potassium persulfate as the initiator was added in the amount as specified in the corresponding composition given above to water contained in a container in an amount equal to the remaining percentage of the amount as specified in the composition, and the mixture was stirred until the potassium persulfate was completely dissolved, resulting in an aqueous solution of the initiator.
(C) Methyl methacrylate, methacrylic acid and butyl acrylate were added as base monomers into a container respectively in the amounts as specified in the corresponding composition given above and homogenized by stirring, followed by removal of polymerization inhibitors and addition of the emulsifier in an amount equal to the remaining 55% by weight of the amount as specified in the corresponding composition given above. The mixture was slowly stirred until the emulsifier and base monomers were completely dissolved so that a mixed monomer solution was obtained.
(D) The reactor was initiated and the reaction was kept under stirring and at a temperature of 70°C, followed by simultaneous addition of the aqueous solution of the initiator obtained from step (B) and the mixed monomer solution from step (C). The addition was controlled to be completed within a period of time of 90±5 minutes, and stirring was stopped subsequent to the completion of the addition. The reaction system was then aged for 2.5 hours, cooled to room temperature, adjusted to a pH of 8 and filtered, thereby obtaining the nanoscale, water-based, narrow molecular weight distribution copolyacrylate.

### Example 3 Preparation of Nanoscale, Water-based, Narrow Molecular Weight Distribution Copolyacrylate C30

(A) NP-10 as the emulsifier was dissolved in an amount equal to 55% by weight of the amount as specified in the composition given above in ultrapure water contained in a reactor in an amount equal to 70% by weight of the amount as specified in the corresponding composition given above. The mixture was stirred until complete dissolution of NP-10 was achieved, thus giving rise to an aqueous solution of the emulsifier, which was then heated to and kept at 85°C.
(B) Ammonium persulfate as the initiator was added in the amount as specified in the corresponding composition given above to water contained in a container in an amount equal to the remaining percentage of the amount as specified in the composition, and the mixture was stirred until the ammonium persulfate was completely dissolved, resulting in an aqueous solution of the initiator.
(C) Methyl methacrylate, methacrylic acid and butyl acrylate were added as base monomers into a container respectively in the amounts as specified in the corresponding composition given above and homogenized by stirring, followed by removal of polymerization inhibitors and addition of the emulsifier in an amount equal to the remaining 45% by weight of the amount as specified in the corresponding composition given above. The mixture was slowly stirred until the emulsifier and base monomers were completely dissolved so that a mixed monomer solution was obtained.
(D) The reactor was initiated and the reaction was kept under stirring and at a temperature of 85°C, followed by simultaneous addition of the aqueous solution of the initiator obtained from step (B) and the mixed monomer solution from step (C). The addition was controlled to be completed within a period of time of 90±5 minutes, and stirring was stopped subsequent to the completion of the addition. The reaction system was then aged for 1.5 hours, cooled to room temperature, adjusted to a pH of 5 and filtered, thereby obtaining the nanoscale, water-based, narrow molecular weight distribution copolyacrylate.

### Example 4 Preparation of Nanoscale, Water-based, Narrow Molecular Weight Distribution Copolyacrylate C30IB-I

A nanoscale, water-based, narrow molecular weight distribution copolyacrylate according to the present invention was prepared as follows:
(A) Sodium dodecyl sulfate as the emulsifier was dissolved in an amount equal to 50% by weight of the amount as specified in the composition given above in ultrapure water contained in a reactor in an amount equal to 90% by weight of the amount as specified in the corresponding composition given above. The mixture was stirred until complete dissolution of the sodium dodecyl sulfate was achieved, thus giving rise to an aqueous solution of the emulsifier, which was then heated to and kept at 80°C.
(B) Ammonium persulfate as the initiator was added in the amount as specified in the corresponding composition given above to water contained in a container in an amount equal to the remaining percentage of the amount as specified in the composition, and the mixture was stirred until the ammonium persulfate was completely dissolved, resulting in an aqueous solution of the initiator.
(C) Methyl methacrylate, methacrylic acid, butyl acrylate and isobornyl acrylate were added as base monomers into a container respectively in the amounts as specified in the corresponding composition given above and homogenized by stirring, followed by removal of polymerization inhibitors and addition of the emulsifier in an amount equal to the remaining 50% by weight of the amount as specified in the corresponding composition given above. The mixture was slowly stirred until the emulsifier and base monomers were completely dissolved so that a mixed monomer solution was obtained.
(D) The reactor was initiated and the reaction was kept under stirring and at a temperature of 80°C, followed by simultaneous addition of the aqueous solution of the initiator obtained from step (B) and the mixed monomer solution from step (C). The addition was controlled to be completed within a period of time of 90±5 minutes, and stirring was stopped subsequent to the completion of the addition. The reaction system was then aged for 2 hours, cooled to room temperature, adjusted to a pH of 6 and filtered, thereby obtaining the nanoscale, water-based, narrow molecular weight distribution copolyacrylate.

### Example 5 Preparation of Nanoscale, Water-based, Narrow Molecular

### Weight Distribution Copolyacrylate C301590

A nanoscale, water-based, narrow molecular weight distribution copolyacrylate according to the present invention was prepared as follows:
(A) Sodium dodecyl sulfate as the emulsifier was dissolved in an amount equal to 50% by weight of the amount as specified in the composition given above in ultrapure water contained in a reactor in an amount equal to 90% by weight of the amount as specified in the corresponding composition given above. The mixture was stirred until complete dissolution of the sodium dodecyl sulfate was achieved, thus giving rise to an aqueous solution of the emulsifier, which was then heated to and kept at 80°C.
(B) Ammonium persulfate as the initiator was added in the amount as specified in the corresponding composition given above to water contained in a container in an amount equal to the remaining percentage of the amount as specified in the composition, and the mixture was stirred until the ammonium persulfate was completely dissolved, resulting in an aqueous solution of the initiator.
(C) Methyl methacrylate, methacrylic acid, butyl acrylate and phosphoric acid acrylate were added as base monomers into a container respectively in the amounts as specified in the corresponding composition given above and homogenized by stirring, followed by removal of polymerization inhibitors and addition of the emulsifier in an amount equal to the remaining 50% by weight of the amount as specified in the corresponding composition given above. The mixture was slowly stirred until the emulsifier and base monomers were completely dissolved so that a mixed monomer solution was obtained.
(D) The reactor was initiated and the reaction was kept under stirring and at a temperature of 80°C, followed by simultaneous addition of the aqueous solution of the initiator obtained from step (B) and the mixed monomer solution from step (C). The addition was controlled to be completed within a period of time of 90±5 minutes, and stirring was stopped subsequent to the completion of the addition. The reaction system was then aged for 2 hours, cooled to room temperature, adjusted to a pH of 6 and filtered, thereby obtaining the nanoscale, water-based, narrow molecular weight distribution copolyacrylate.

### Example 6 Fourier-Transform Infrared Spectroscopy (FTIR) and Analysis

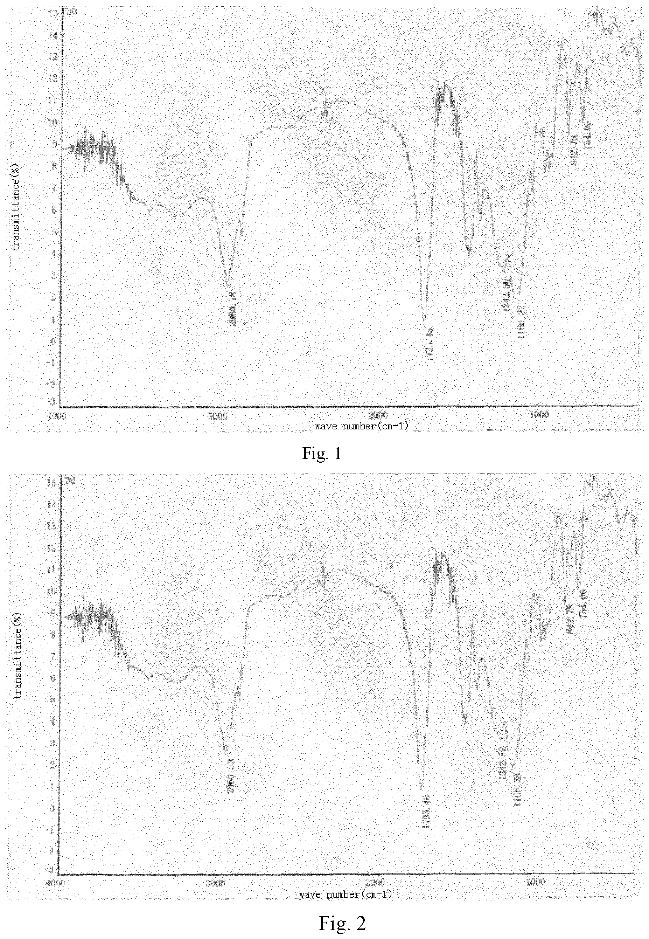

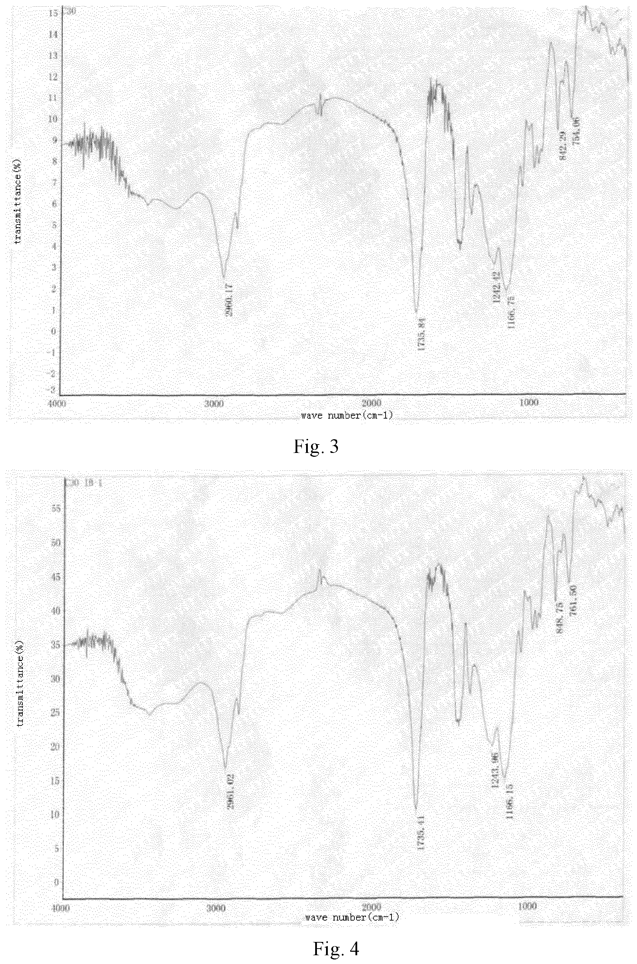

FTIR was performed on the nanoscale, water-based, narrow molecular weight distribution copolyacrylates of Examples 1-5, and the resulting FTIR spectra are shown in Figs. 1 to 5.

As can be seen from Figs. 1-3, the FTIR spectra of C30 obtained in Examples 1-3 are almost identical to one another. As can be seen from Figs. 1-5, the FTIR spectra of C30, C30IB-I and C301590 are very similar to one another. FTIR was performed by Shanghai Huayi Inspection & Testing Technology Co., Ltd., and the results show that C30, C30IB-I and C301590 are all acrylate resins.

The nanoscale, water-based, narrow molecular weight distribution copolyacrylates C30 each include main chain segments of the following formula as speculated from the FTIR spectra:

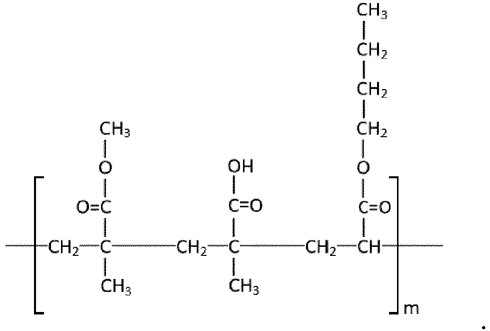

The nanoscale, water-based, narrow molecular weight distribution copolyacrylates C30IB-I and C301590 each further include functional chain segments of the following formula as speculated from their FTIR spectra:

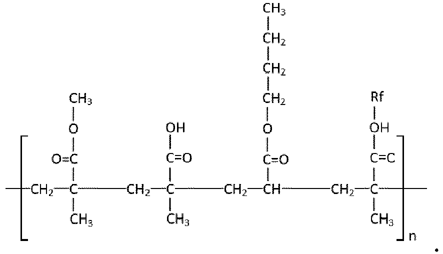

Functional groups in the functional chain segments include heterocyclic groups or ester groups with long carbon chains.

### Example 7 Particle Size and Polydispersity Index (PDI) Analysis

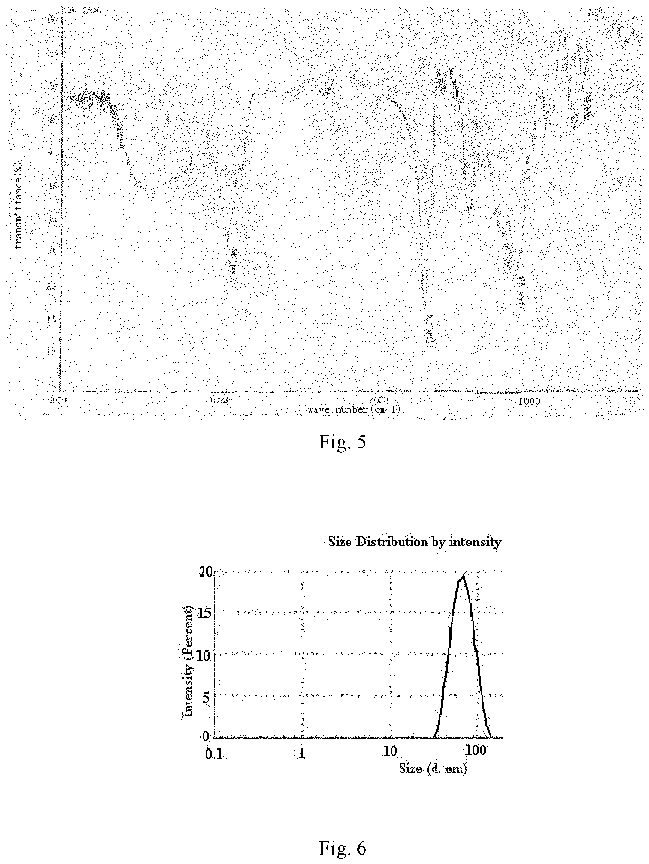

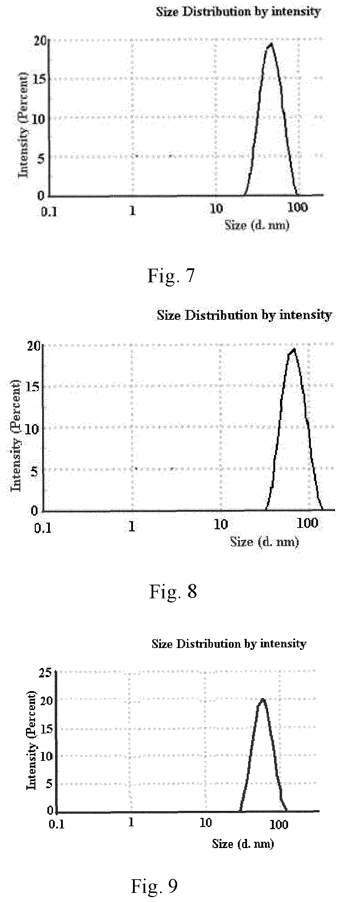

D50 particle sizes and polydispersity indices (PdIs) (Dw/Dn) of the samples were tested on a Malvern laser particle size analyzer and a zeta potential analyzer (in short, Malvern dynamic light scattering particle size analyzer) ZEN3600, where Dw and Dn denote weight-average and number-average particle diameters, respectively. The results are shown in Table 2 and Figs. 6-10.

**Table 2 Particle Size Data of Nanoscale, Water-based, Narrow Molecular Weight Distribution Copolyacrylates**

| | Example 1 | Example 2 | Example 3 | Example 4 | Example 5 |
|---|---|---|---|---|---|
| Sample | C30 | C30 | C30 | C30IB-I | C301590 |
| D50 (nm) | 65 | 40 | 62.63 | 55.90 | 56.13 |
| PdI (Dw/Dn) | 0.057 | 0.055 | 0.058 | 0.043 | 0.054 |

As can be seen from both the data in Table 2 and Figs. 6-10, the copolyacrylates of Examples 1-5 have D50 values in the range of 40-65 nm and PdIs (Dw/Dn) in the range of 0.043-0.058. All of them are uniform nanoscale polymers with narrow, normal molecular weight distributions.

According to relevant information about the Malvern dynamic light scattering particle size analyzer and relevant literatures, it can be concluded that a polydispersity index PDI (Mw/Mn) of a micro- or nano-material measured by gel permeation chromatography (GPC) and a polydispersity index PdI (Dw/Dn) of the material measured by the particle size analyzer satisfy the following formula: b=4^{∗}a^2+1, where b represents the GPC-measured PDI (Mw/Mn) and a is the PdI (Dw/Dn) obtained by the Malvern dynamic light scattering particle size analyzer.

Accordingly, calculated PDIs (Mw/Mn) range from 1.007 to 1.01, i.e., <1.01, lower than 1.05, a critical value for identifying a monodisperse system as specified in the literatures.

Conclusively, PDI (Mw/Mn) values of the copolyacrylates prepared in accordance with the present invention are all < 1.05, indicating that they are monodisperse materials each with a nanoscale size (<100 nm), a narrow particle size distribution and a normal molecular weight distribution. That is to say, they are nanoscale, water-based, narrow molecular weight distribution copolyacrylates.

### Example 8 Differential Scanning Calorimetry (DSC) Analysis

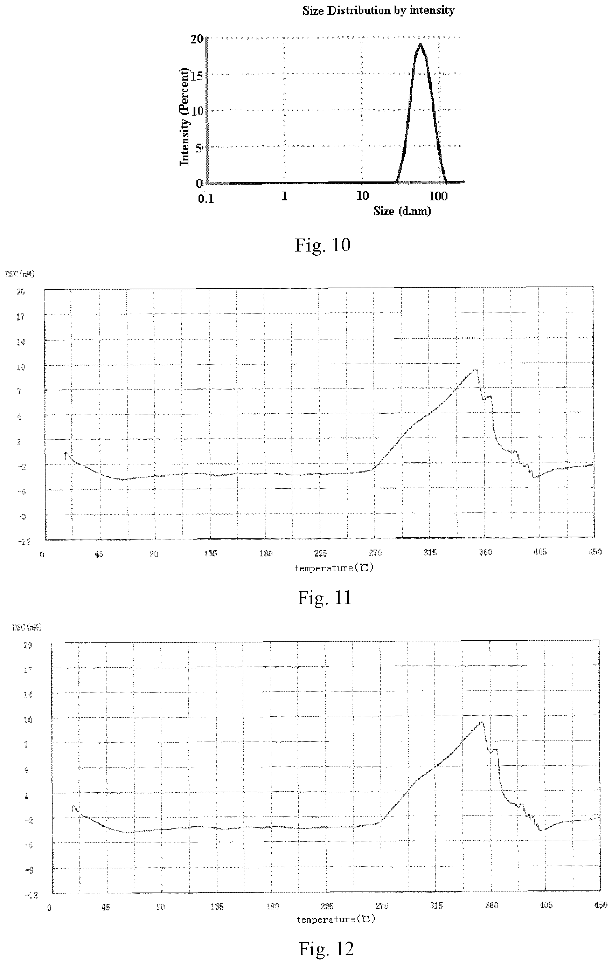

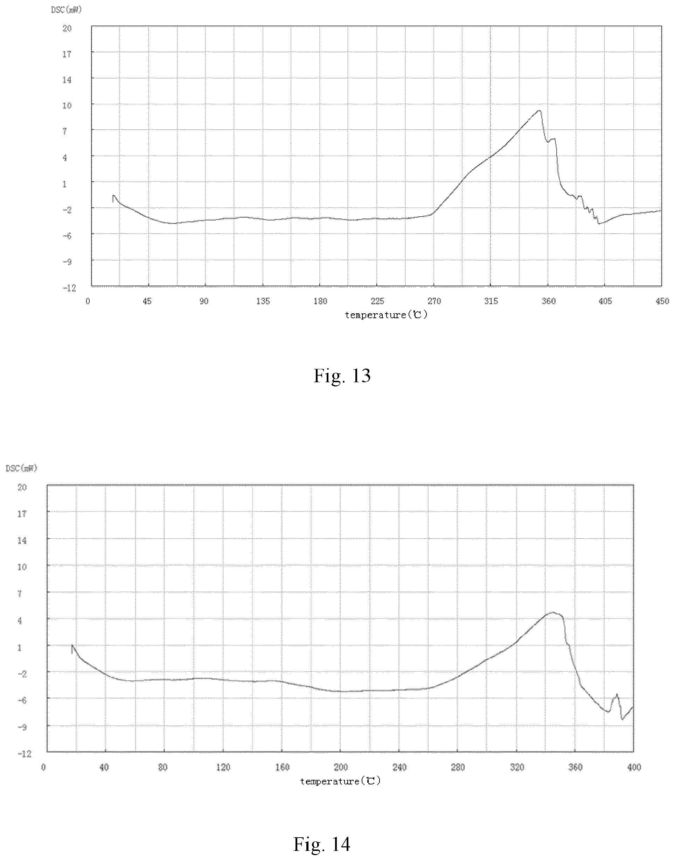

The copolyacrylates C30, C30IB-I and C301590 of Examples 1-5 were analyzed by differential scanning calorimetry (DSC) under the following DSC conditions: 18 mg of each sample, which was ground to powder and not added with any additive, was scanned at a rate of 10.00°C/min in a nitrogen atmosphere created by a nitrogen flow rate of 66 mL/min. The resulting DSC ex-otherms are shown in Figs. 11-15.

The results show a glass transition temperature of 38 °C for C30 and a glass transition temperature of 36 °C for both C30IB-I and C301590. As can be seen from Figs. 11-15, the DSC curves of C30, C30IB-I and C301590 are consistent with one another.

Therefore, the copolyacrylates C30IB-I and C301590 containing functional groups have similar thermodynamic properties to the copolyacrylates C30.

### Example 9 Solid Content and Viscosity

Viscosities and solid contents of the copolyacrylates C30, C30IB-I and C301590 of Examples 1-5 were tested and compared to a commercially available water-soluble acrylate resin (Model: HMP-3212) used as a control. The viscosity testing was carried out on an NDJ-1 rotary viscometer. The results are shown in Table 3.

The solid content of each sample was measured by repeating 120-minute drying cycles on 4 g of the sample in an oven at a constant temperature of 120 °C until it does not lose weight any more.

**Table 3 Viscosity and Solid Content Test Results of C30, C30IB-I and C301590**

| Example | Example 1 | Example 2 | Example 3 | Example 4 | Example 5 | Comparative Example 1 |
|---|---|---|---|---|---|---|
| Sample | C30 | C30 | C30 | C30IB-I | C301590 | Commercially Available Water-Soluble Acrylate Resin |
| Viscosity (cps) | 10 | 10.2 | 10.8 | 11.5 | 10.5 | 2500 |
| Solid Content (wt. %) | 33.87 | 33.65 | 33.46 | 35.35 | 33.75 | 33.90 |

As can be seen from the data in Table 3, the samples prepared in Examples 1-5 have viscosities in the range of 10-11.5 cps and solid contents in the range of 33.46-35.35 wt. %. By contrast, the commercially available product with a comparable solid content to those of Examples 1-5 exhibits a viscosity of 2500 cps, significantly higher than the viscosities of the copolyacrylates of Examples 1-5. Thus, the copolyacrylates prepared in accordance with the present invention feature low viscosities and high solid contents.

The low viscosity characteristic allows the copolyacrylates of the present invention to be used in systems in downstream applications without requiring the addition of other organic solvents or additives for reducing the systems' viscosities while still achieving comparable performance to other acrylate resins containing such organic solvent or additives. Dispensing with the use of those organic solvent or additives can significantly reduce the systems' VOC contents. Moreover, as the copolyacrylates of the invention show low viscosities at high solid contents, they can give a great additional convenience to the subsequent processing.

The above Examples have demonstrated excellent properties of the nanoscale, water-based, narrow molecular weight distribution copolyacrylates prepared in accordance with the invention. In following Examples 10-14, fully water-based inks containing the copolyacrylates of Examples 1-5 were prepared and assessed for their properties.

### Examples 10-14 Preparation of Fully Water-Based Inks

Table 4 summarizes compositions of fully water-based inks of Examples 10-14.

**Table 4 Compositions of Fully water-based inks**

| Example | | Example 10 | Example 11 | Example 12 | Example 13 | Example 14 |
|---|---|---|---|---|---|---|
| Ingredient | | wt. % | | | | |
| A: Fully Water-Based Color Paste | Water | 60 | 63 | 65 | 68 | 70 |
| | Lithium Magnesium Silicate | 1.5 | 0.5 | 1.0 | 1.2 | 1.0 |
| | Linear Alkylbenzene Sulfonate (LAS) | 0.5 | 1.5 | 1.0 | 0.8 | 1.0 |
| | Permanent Yellow | 38 | 35 | 33 | 30 | 28 |
| B Fully Water-Based Binder | Aqueous Solution of Wetting Agent (YM-313) | 0.3 | 0.35 | 0.4 | 0.45 | 0.5 |
| | Aqueous solution of Mildewcide (lxe) | 0.6 | 0.55 | 0.5 | 0.45 | 0.4 |
| | C30 | 91 | 91.5 | 80.82 | 90.3 | 81.8 |
| | C30IB-I | | | 8.98 | | 8.0 |
| | Ammonia Dilution | 4.9 | 4.4 | 6 | 5.5 | 6 |
| | Propylene Carbonate | 0.1 | 0.1 | 0.2 | 0.2 | 0.2 |
| | Oxidized Polyethylene Wax Emulsion (E-810) | 2.3 | 0 | 2.4 | 2.6 | 3.0 |
| | Oxidized Polypropylene Wax Emulsion (E-668H) | 0.7 | 3.0 | 0.6 | 0.4 | 0 |
| C Fully Water-Based Ink | Fully Water-Based Binder | 70 | 71.9 | 76.9 | 78.9 | 80 |
| | Color Paste | 29.85 | 28 | 23 | 21 | 19.95 |
| | Fatty Alcohol Defoamer | 0.15 | 0.1 | 0.1 | 0.1 | 0.05 |

Among the listed ingredients, the wetting agent YM-313, mildewcide lxe and ammonia are all commercially available products, and the commercially available ammonia has a concentration of 25%. These commercially available products were all diluted with water at a ratio of 1:10 to prepare the aqueous solution of the wetting agent (YM-313), aqueous solution of the mildewcide (lxe) and ammonia dilution, which were in turn used to prepare the fully water-based binder.

C30 in Example 10 was prepared from Example 1, C30 in Example 11 from Example 2, C30 in Example 12 from Example 3, C30IB-I in Example 12 from Example 4, C30 in Example 13 from Example 1, C30 in Example 14 from Example 1 and C301590 in Example 14 from Example 5.

### Method of Preparing Fully Water-Based Inks

### (1) Preparation of Fully Water-Based Color Paste

Deionized water was added to a container in the amount as specified in the corresponding composition given above and stirring was begun with a rate being controlled at 50-80 rpm. With the stirring being continued, lithium magnesium silicate was added in the amount as specified in the corresponding composition given above and completely dissolved, followed by the addition and complete dissolution of LAS in the amount as specified in the corresponding composition given above. The organic pigment, permanent yellow, was then added in the amount as specified in the corresponding composition given above and uniformly dispersed using a dispersion disc, thus resulting in the fully water-based color paste, which was then preserved for subsequent use.

### (2) Preparation of Fully Water-Based Binder

This was accomplished by the following steps:
a) An aqueous solution of the wetting agent (YM-313) and an aqueous solution of the mildewcide (lxe) were added to a container in the respective amounts as specified in the corresponding composition given above and stirring was started with a controlled rate of 50-80 rpm.
b) The fully water-based resin(s) C30 and/or C30IB-I was/were added in the amount(s) as specified in the corresponding composition given above and homogenized by stirring and a pH of the system was adjusted to 4.5-7.5 by drop-wise addition of the ammonia dilution in the amount as specified in the corresponding composition given above. The stirring was continued for 15 minutes so that the system became homogeneous. Propylene carbonate was then added in the amount as specified in the corresponding composition given above and homogenized by stirring for 15 minutes.
c) Oxidized polyethylene wax emulsion E-810 and Oxidized polypropylene wax emulsion E-668H were added in the amounts as specified in the corresponding composition given above and homogenized by stirring for 30 minutes, thus giving rise to the fully water-based binder, which was then kept for subsequent use.

### (3) Preparation of Fully Water-Based Ink

The fully water-based binder was added to a container in the amount as specified in the corresponding composition given above and stirring was begun with a rate controlled at 50-80 rpm. The fully water-based color paste was added in the amount as specified in the corresponding composition given above and homogenized by stirring, followed by the addition and homogenization by stirring of the fatty alcohol defoamer in the amount as specified in the corresponding composition given above, thereby obtaining the inventive fully water-based ink.

In following Examples 15-17, the fully water-based inks of Examples 10-14 were evaluated for their properties.

### Example 15 Particle Size Analysis

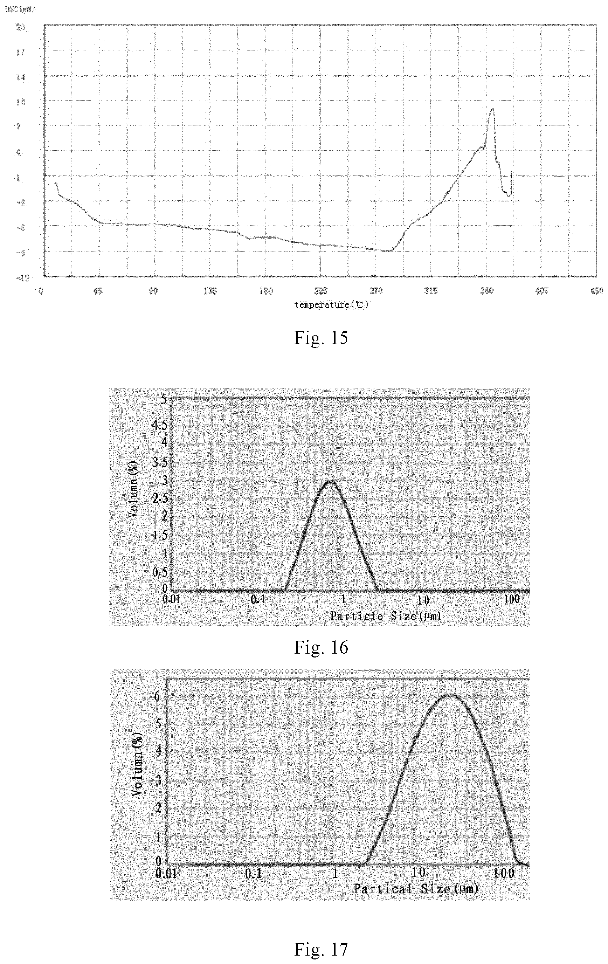

Particle sizes of the fully water-based inks of Examples 10-14 and a water-based color paste for ink use from American Color Inc. were measured. A particle size distribution of the fully water-based ink of Example 10 is shown in Fig. 16, and the fully water-based inks of Examples 11-14 each have almost the same particle size distribution as in Fig. 16. Fig. 17 shows a particle size distribution of the water-based color paste for ink use from American Color Inc.

As revealed by a comparison of Figs. 16 and 17, the fully water-based inks embodying the compositions of the invention and prepared by the process of the invention have finer particle sizes than the conventional water-based color paste for ink use, promising a good surface gloss of a film formed by any of these fully water-based inks.

### Example 16 VOC Testing of Fully Water-Based Inks

VOC testing was performed on the fully water-based inks of Examples 10-14 in SGS, an internationally recognized organization for certification, according to the standard HJ/T371-2007. The results of all the tested indicators were all "ND", in line with the requirements of China's domestic environmental protection regulations and EU's RoHS directive and SVHC REACH regulation.

### Example 17 Drying Rate Testing

The fully water-based inks of Examples 10-14 were tested for initial dryness according to the standard GB/T13217.5-2008 - Test Method for Initial Dryness of Liquid Ink. The results show that the initial dryness of all the fully water-based inks of Examples 10-14 meets the relevant requirements specified in QB/T 1046-2012 - Gravure Ink for Plastic Film.

Compared with a commercially available water-based ink sample, which usually takes more than 90 seconds to dry naturally on a standard substrate at atmospheric temperature, the fully water-based inks of Examples 10-14 dried naturally on such testing substrates at atmospheric temperature within 60 seconds, indicating faster drying rates of the fully water-based inks of Examples 10-14.

### Example 18 Water Resistance Testing

When a commercially available water-based ink sample applied to a standard substrate is soaked in water at atmospheric temperature, colorant loss and bubbling will be observed typically within 48 hours. By contrast, after applied to a same standard substrate and soaked in water at atmospheric temperature, no obvious changes were seen within more than one week for any of the fully water-based inks of Examples 10-14, and samples taken from the soaking water remained colorless. This indicates that the fully water-based inks of the invention possess good water resistance.

### Example 19 Evaluation of After-Tack Resistance

Pressing tests were carried out on testing substrates printed with the fully water-based inks of Examples 10-14, and the results show that the fully water-based inks of the invention will not experience after-tack or colorant loss due to moisture regain or other reasons, indicating good after-tack resistance of the fully water-based inks of the invention.

### Example 20 Cohesion Testing

Adhesion of the fully water-based inks of Examples 10-14 to PET films was tested according to GB/T13217.7 - Test Method for Adhesion to Substrate of Liquid Ink with Tape.

According to the results of the tape tests, peel-off percentages of the inks were all lower than 2%, showing their adhesion meeting the relevant requirements of QB/T 1046-2012 - Gravure Inks for Plastic Film.

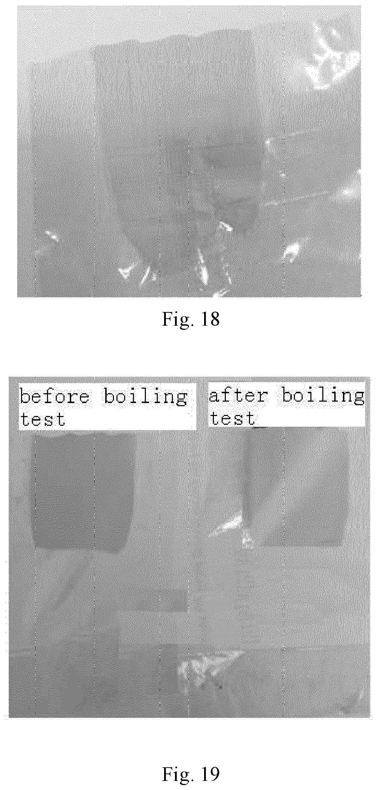

Cohesion of the fully water-based inks of Examples 10-14 was tested using a cross-cut method. A test setup for the fully water-based ink of Example 10 is shown in Fig. 18. The test results show that the dry fully water-based inks exhibit strong cohesion, which make them free of colorant loss in tape tests and rated at 0 in cross-cut tests (i.e., totally smooth edges of cuts without any formed square peeled off) using a HGQ (1mm) cutter (ISO2409-1974). This demonstrates excellent cohesion of the fully water-based inks of the Examples 10-14.

### Example 21 Water Boiling Resistance

The fully water-based inks of Examples 10-14 were tested by boiling testing substrates printed with them in water at 100 °C for 30 minutes. No significant changes were seen between the boiled and unprocessed testing substrates. A sample for Example 10 that has experienced a water boiling test is shown in Fig. 19, and water-boiled samples for the other Examples have comparable appearance. No peel-off was recorded in tape tests using dedicated adhesive tape.

Therefore, the fully water-based inks of the present invention have excellent water boiling resistance and can be used for the printing of food packaging materials that are required to be heated for sterilization.

Further, when printed on PET films or other film substrates, the fully water-based inks of the invention will exhibit such great tensile resilience as to enable their complete recovery from stretching with the printed substrates.

## Claims

1. A nanoscale, water-based, narrow molecular weight distribution copolyacrylate, wherein materials from which the copolyacrylate is synthesized include methyl methacrylate, methacrylic acid and butyl acrylate as base monomers, and wherein the nanoscale, water-based, narrow molecular weight distribution copolyacrylate is prepared by polymerization of the base monomers under the action of an emulsifier and an initiator in a purely water-based system;
and wherein the nanoscale, water-based, narrow molecular weight distribution copolyacrylate has a D50 particle size of 40-65 nm and a polydispersity index (PDI) (Mw/Mn) of <1.05, wherein the D50 particle size and the polydispersity index (PDI) (Mw/Mn) are determined by Malvern laser particle size analyzer and zeta potential analyzer;
and wherein the nanoscale, water-based, narrow molecular weight distribution copolyacrylate is prepared by compositions of materials below through the following steps:
wherein, the materials from which the nanoscale, water-based, narrow molecular weight distribution copolyacrylate is synthesized include, by weight percentage:
| | |
|---|---|
| methyl methacrylate | 12-25%; |
| methacrylic acid | 1.5-5%; |
| butyl acrylate | 12-25%; |
| emulsifier | 1.5-2.5%; |
| initiator | 0.03-0.15%; |
| water | 55.4-59.97%; |
wherein, the preparation comprising the steps of:
(A) adding an emulsifier in an amount equal to part of a prescribed amount for the emulsifier to water in an amount equal to an appropriate part of a prescribed amount for the water in a reactor, forming an aqueous solution of the emulsifier by stirring the mixture until the emulsifier is completely dissolved, heating the aqueous solution to 70-85°C and maintaining it at the temperature;
(B) successively adding the water in an amount equal to the remaining part of the prescribed amount for the water and an initiator in a prescribed amount for the initiator to a container and obtaining an aqueous solution of the initiator by stirring the mixture until the initiator is completely dissolved;
(C) homogeneously mixing base monomers added in respective prescribed amounts to a container, adding thereto the emulsifier in an amount equal to the remaining part of the prescribed amount for the emulsifier and obtaining a mixed monomer solution by slowly stirring the mixture until the base monomers are completely dissolved; and
(D) with stirring initiated in the reactor and a temperature therein maintained at 70-85°C, simultaneously adding the aqueous solution of the initiator from step (B) and the mixed monomer solution from step (C) to the reactor, stopping the stirring after the addition is completed, aging the reaction system for an appropriate period of time, cooling it, adjusting its pH to a desired value and filtering it, thus obtaining the nanoscale, water-based, narrow molecular weight distribution copolyacrylate;
wherein in step (A), the appropriate part of the prescribed amount for the water is 70-90% by weight and the amount equal to the part of the prescribed amount for the emulsifier is 45-55% by weight.

2. The nanoscale, water-based, narrow molecular weight distribution copolyacrylate according to claim 1, wherein the materials from which the nanoscale, water-based, narrow molecular weight distribution copolyacrylate is synthesized further includes a heterocyclic ester or an ester with a long carbon chain as a functional monomer.

3. The nanoscale, water-based, narrow molecular weight distribution copolyacrylate according to claim 2, wherein the heterocyclic ester is present at a weight percentage less than 5%, and the ester with a long carbon chain is present at a weight percentage less than 5%.

4. The nanoscale, water-based, narrow molecular weight distribution copolyacrylate according to claim 3, wherein the heterocyclic ester is selected from one or more of isobornyl acrylate and isobornyl methacrylate, and the ester with a long carbon chain is selected from one or more of phosphoric acid acrylate, dodecyl acrylate and octadecyl acrylate.

5. The nanoscale, water-based, narrow molecular weight distribution copolyacrylate according to any one of claims 1 to 4, wherein the nanoscale, water-based, narrow molecular weight distribution copolyacrylate has a solid content of >30 wt. %.

6. A method of preparing a nanoscale, water-based, narrow molecular weight distribution copolyacrylate, comprising the steps of:
(A) adding an emulsifier in an amount equal to part of a prescribed amount for the emulsifier to water in an amount equal to an appropriate part of a prescribed amount for the water in a reactor, forming an aqueous solution of the emulsifier by stirring the mixture until the emulsifier is completely dissolved, heating the aqueous solution to 70-85 °C and maintaining it at the temperature;
(B) successively adding the water in an amount equal to the remaining part of the prescribed amount for the water and an initiator in a prescribed amount for the initiator to a container and obtaining an aqueous solution of the initiator by stirring the mixture until the initiator is completely dissolved;
(C) homogeneously mixing base monomers added in respective prescribed amounts to a container, adding thereto the emulsifier in an amount equal to the remaining part of the prescribed amount for the emulsifier and obtaining a mixed monomer solution by slowly stirring the mixture until the base monomers are completely dissolved; and
(D) with stirring initiated in the reactor and a temperature therein maintained at 70-85 °C, simultaneously adding the aqueous solution of the initiator from step (B) and the mixed monomer solution from step (C) to the reactor, stopping the stirring after the addition is completed, aging the reaction system for an appropriate period of time, cooling it, adjusting its pH to a desired value and filtering it, thus obtaining the nanoscale, water-based, narrow molecular weight distribution copolyacrylate,
wherein, the base monomers in step (C) include methyl methacrylate, methacrylic acid and butyl acrylate;
and wherein the nanoscale, water-based, narrow molecular weight distribution copolyacrylate has a D50 particle size of 40-65 nm and a polydispersity index (PDI) (Mw/Mn) of <1.05, wherein the D50 particle size and the polydispersity index (PDI) (Mw/Mn) are determined by Malvern laser particle size analyzer and zeta potential analzyer.

7. The method of claim 6, wherein in step (A), the appropriate part of the prescribed amount for the water is 70-90% by weight and the amount equal to the part of the prescribed amount for the emulsifier is 45-55% by weight.

8. The method of claim 6, wherein in step (C), the appropriate aging period of time is 2±0.5 hours.

9. The method of claim 6, wherein in step (D), the desired pH value is 5-8.

10. The method of claim 6, wherein in step (C), wherein the materials from which the nanoscale, water-based, narrow molecular weight distribution copolyacrylate is synthesized further include a heterocyclic ester or an ester with a long carbon chain as a functional monomer.

11. The method of claim 10, wherein the heterocyclic ester is present at a weight percentage less than 5%, and the ester with a long carbon chain is present at a weight percentage less than 5%.

12. Use of the nanoscale, water-based, narrow molecular weight distribution copolyacrylate of any one of claims 1 to 5 as a water-based resin.

13. The use of claim 12, wherein the nanoscale, water-based, narrow molecular weight distribution copolyacrylate is used in the preparation of a fully water-based ink.

## Patentansprüche

1. Nanoskaliges wasserbasiertes Copolyacrylat mit enger Molekulargewichtsverteilung, wobei die Materialien, aus denen das Copolyacrylat synthetisiert wird, Methylmethacrylat, Methacrylsäure und Butylacrylat als Basismonomere enthalten, und wobei das nanoskalige wasserbasierte Copolyacrylat mit enger Molekulargewichtsverteilung durch Polymerisation der Basismonomere unter der Einwirkung eines Emulgators und eines Initiators in einem rein wasserbasierten System hergestellt wird;
und wobei das nanoskalige, wasserbasierte Copolyacrylat mit enger Molekulargewichtsverteilung eine D50-Teilchengröße von 40-65 nm und einen Polydispersitätsindex (PDI) (Mw/Mn) von <1,05 aufweist, wobei die D50-Teilchengröße und der Polydispersitätsindex (PDI) (Mw/Mn) durch einen Malvern-Laser-Teilchengrößenanalysator und einen Zeta-Potentialanalysator bestimmt werden;
und wobei das nanoskalige, wasserbasierte Copolyacrylat mit enger Molekulargewichtsverteilung durch nachfolgende Zusammensetzungen von Materialien durch die folgenden Schritte hergestellt wird:
wobei die Materialien, aus denen das nanoskalige, wasserbasierte Copolyacrylat mit enger Molekulargewichtsverteilung synthetisiert wird, in Gewichtsprozent enthalten:
| | |
|---|---|
| Methylmethacrylat | 12-25%; |
| Methacrylsäure | 1,5-5%; |
| Butylacrylat | 12-25%; |
| Emulgator | 1,5-2,5%; |
| Initiator | 0,03-0,15%; |
| Wasser | 55,4-59,97%; |
wobei die Herstellung die folgenden Schritte umfasst:
(A) Zugabe eines Emulgators in einer Menge, die einem Teil einer für den Emulgator beschriebenen Menge entspricht, zu Wasser in einer Menge, die einem geeigneten Teil einer für das Wasser beschriebenen Menge entspricht, in einem Reaktor, Bildung einer wässrigen Lösung des Emulgators durch Rühren des Gemisches, bis der Emulgator vollständig gelöst ist, Erhitzen der wässrigen Lösung auf 70-85°C und Halten auf dieser Temperatur;
(B) sukzessive Zugabe des Wassers in einer Menge, die dem verbleibenden Teil der beschriebenen Menge für das Wasser entspricht, und eines Initiators in einer beschriebenen Menge für den Initiator in einen Behälter und Erhalt einer wässrigen Lösung des Initiators durch Rühren des Gemisches, bis der Initiator vollständig aufgelöst ist;
(C) homogenes Mischen von Basismonomeren, die in jeweils beschriebenen Mengen in einen Behälter gegeben werden, Hinzufügen des Emulgators in einer Menge, die dem verbleibenden Teil der beschriebenen Menge für den Emulgator entspricht, und Erhalten einer gemischten Monomerlösung durch langsames Rühren des Gemisches, bis die Basismonomere vollständig gelöst sind; und
(D) mit Rühren initiiert in dem Reaktor und bei einer Temperatur darin gehalten bei 70-85 °C, gleichzeitige Zugabe der wässrigen Lösung des Initiators aus Schritt (B) und der gemischten Monomerlösung aus Schritt (C) in den Reaktor, Unterbrechen des Rührens nachdem die Zugabe abgeschlossen ist, Altern des Reaktionssystems für eine geeignete Zeitdauer, Abkühlen desselben, Einstellen seines pH-Werts auf einen gewünschten Wert und Filtrieren desselben, wodurch das nanoskalige, wasserbasierte Copolyacrylat mit enger Molekulargewichtsverteilung erhalten wird;
wobei in Schritt (A) der geeignete Teil der beschriebenen Menge für das Wasser 70-90 Gew.-% beträgt und die Menge, die dem Teil der beschriebenen Menge für den Emulgator entspricht, 45-55 Gew.-% beträgt.

2. Das nanoskalige, wasserbasierte Copolyacrylat mit enger Molekulargewichtsverteilung gemäß Anspruch 1, wobei die Materialien, aus denen das nanoskalige, wasserbasierte Copolyacrylat mit enger Molekulargewichtsverteilung synthetisiert wird, ferner einen heterocyclischen Ester oder einen Ester mit einer langen Kohlenstoffkette als funktionelles Monomer enthalten.

3. Das nanoskalige, wasserbasierte Copolyacrylat mit enger Molekulargewichtsverteilung gemäß Anspruch 2, wobei der heterozyklische Ester in einem Gewichtsprozentanteil von weniger als 5 % vorhanden ist und der Ester mit einer langen Kohlenstoffkette in einem Gewichtsprozentanteil von weniger als 5 % vorhanden ist.

4. Das nanoskalige, wasserbasierte Copolyacrylat mit enger Molekulargewichtsverteilung gemäß Anspruch 3, wobei der heterocyclische Ester ausgewählt ist aus einem oder mehreren von Isobomylacrylat und Isobomylmethacrylat und der Ester mit einer langen Kohlenstoffkette ausgewählt ist aus einem oder mehreren von Phosphorsäureacrylat, Dodecylacrylat und Octadecylacrylat.

5. Das nanoskalige, wasserbasierte Copolyacrylat mit enger Molekulargewichtsverteilung gemäß einem der Ansprüche 1 bis 4, wobei das nanoskalige, wasserbasierte Copolyacrylat mit enger Molekulargewichtsverteilung einen Feststoffgehalt von >30 Gew.-% aufweist.

6. Verfahren zur Herstellung eines nanoskaligen, wasserbasierten Copolyacrylats mit enger Molekulargewichtsverteilung umfassend die folgenden Schritte:
(A) Zugabe eines Emulgators in einer Menge, die einem Teil einer für den Emulgator beschriebenen Menge entspricht, zu Wasser in einer Menge, die einem geeigneten Teil einer für das Wasser beschriebenen Menge entspricht, in einem Reaktor, Bildung einer wässrigen Lösung des Emulgators durch Rühren des Gemisches, bis der Emulgator vollständig gelöst ist, Erhitzen der wässrigen Lösung auf 70-85 °C und Halten auf dieser Temperatur;
(B) sukzessive Zugabe des Wassers in einer Menge, die dem verbleibenden Teil der beschriebenen Menge für das Wasser entspricht, und eines Initiators in einer beschriebenen Menge für den Initiator in einen Behälter und Erhalt einer wässrigen Lösung des Initiators durch Rühren des Gemisches, bis der Initiator vollständig aufgelöst ist;
(C) homogenes Mischen von Basismonomeren, die in jeweils beschriebenen Mengen in einen Behälter gegeben werden, Hinzufügen des Emulgators in einer Menge, die dem verbleibenden Teil der beschriebenen Menge für den Emulgator entspricht, und Erhalten einer gemischten Monomerlösung durch langsames Rühren des Gemisches, bis die Basismonomere vollständig gelöst sind; und
(D) mit Rühren initiiert in dem Reaktor und bei einer Temperatur darin gehalten bei 70-85 °C, gleichzeitige Zugabe der wässrigen Lösung des Initiators aus Schritt (B) und der gemischten Monomerlösung aus Schritt (C) in den Reaktor, Unterbrechen des Rührens nachdem die Zugabe abgeschlossen ist, Altern des Reaktionssystems für eine geeignete Zeitdauer, Abkühlen desselben, Einstellen seines pH-Werts auf einen gewünschten Wert und Filtrieren desselben, wodurch das nanoskalige, wasserbasierte Copolyacrylat mit enger Molekulargewichtsverteilung erhalten wird,
wobei die Basismonomere in Schritt (C) Methylmethacrylat, Methacrylsäure und Butylacrylat enthalten;
und wobei das nanoskalige, wasserbasierte Copolyacrylat mit enger Molekulargewichtsverteilung eine D50-Teilchengröße von 40-65 nm und einen Polydispersitätsindex (PDI) (Mw/Mn) von <1,05 aufweist, wobei die D50-Teilchengröße und der Polydispersitätsindex (PDI) (Mw/Mn) durch einen Malvern-Laser-Teilchengrößenanalysator und einen Zeta-Potentialanalysator bestimmt werden.

7. Verfahren nach Anspruch 6, wobei in Schritt (A) der geeignete Teil der beschriebenen Menge für das Wasser 70-90 Gew.-% beträgt und die Menge, die dem Teil der beschriebenen Menge für den Emulgator entspricht, 45-55 Gew.-% beträgt.

8. Verfahren nach Anspruch 6, wobei in Schritt (C) die geeignete Zeitdauer für die Alterung 2±0,5 Stunden beträgt.

9. Verfahren nach Anspruch 6, wobei in Schritt (D) der gewünschte pH-Wert 5-8 beträgt.

10. Verfahren nach Anspruch 6, wobei in Schritt (C) die Materialien, aus denen das nanoskalige, wasserbasierte Copolyacrylat mit enger Molekulargewichtsverteilung synthetisiert wird, ferner einen heterocyclischen Ester oder einen Ester mit einer langen Kohlenstoffkette als funktionelles Monomer enthalten.

11. Verfahren nach Anspruch 10, wobei der heterozyklische Ester in einem Gewichtsprozentanteil von weniger als 5 % vorhanden ist und der Ester mit einer langen Kohlenstoffkette in einem Gewichtsprozentanteil von weniger als 5 % vorhanden ist.

12. Verwendung des nanoskaligen, wasserbasierten Copolyacrylats mit enger Molekulargewichtsverteilung nach einem der Ansprüche 1 bis 5 als wasserbasiertes Harz.

13. Verwendung nach Anspruch 12, wobei das nanoskalige, wasserbasierte Copolyacrylat mit enger Molekulargewichtsverteilung bei der Herstellung einer vollständig wasserbasierten Tinte verwendet wird.

## Revendications

1. Un copolyacrylate nanométrique, à base d'eau, à distribution étroite de poids moléculaire, dans lequel les matériaux à partir desquels le copolyacrylate est synthétisé incluent le méthacrylate de méthyle, l'acide méthacrylique et l'acrylate de butyle comme monomères de base, et dans lequel le copolyacrylate nanométrique, à base d'eau, à distribution étroite de poids moléculaire est préparé par polymérisation des monomères de base sous l'action d'un émulsifiant et d'un initiateur dans un système purement à base d'eau ;
et dans lequel le copolyacrylate nanométrique, à base d'eau, à distribution étroite de poids moléculaire a une taille de particule D50 de 40-65 nm et un indice de polydispersité (PDI) (Mw/Mn) de < 1,05, dans lequel la taille de particule D50 et l'indice de polydispersité (PDI) (Mw/Mn) sont déterminés par un analyseur de taille de particule à laser Malvern et un analyseur de potentiel zêta ;
et dans lequel le copolyacrylate nanométrique, à base d'eau, à distribution étroite de poids moléculaire est préparé par des compositions de matériaux ci-dessous à travers les étapes suivantes :
dans lequel, les matériaux à partir desquels le copolyacrylate nanométrique, à base d'eau, à distribution étroite de poids moléculaire est synthétisé incluent, en pourcentage de poids :
| | |
|---|---|
| méthacrylate de méthyle | 12-25% ; |
| acide méthacrylique | 1,5-5% ; |
| acrylate de butyle | 12-25% ; |
| émulsifiant | 1,5-2,5% ; |
| initiateur | 0,03-0,15 % ; |
| eau | 55,4-59,97% ; |
dans lequel, la préparation comprenant les étapes de :
(A) ajouter un émulsifiant dans une quantité égale à une partie d'une quantité prescrite pour l'émulsifiant à de l'eau dans une quantité égale à une partie appropriée d'une quantité prescrite pour l'eau dans un réacteur, former une solution aqueuse de l'émulsifiant en remuant le mélange jusqu'à ce que l'émulsifiant soit complètement dissous, chauffer la solution aqueuse à 70-85°C et la maintenir à la température ;
(B) ajouter successivement l'eau dans une quantité égale à la partie restante de la quantité prescrite pour l'eau et un initiateur dans une quantité prescrite pour l'initiateur dans un récipient et obtenir une solution aqueuse de l'initiateur en remuant le mélange jusqu'à ce que l'initiateur soit complètement dissous ;
(C) mélanger de manière homogène les monomères de base ajoutés en quantités prescrites respectives dans un récipient, en y ajoutant l'émulsifiant en une quantité égale à la partie restante de la quantité prescrite pour l'émulsifiant et en obtenant une solution de monomère mélangés en remuant lentement le mélange jusqu'à ce que les monomères de base soient complètement dissous ; et
(D) avec une agitation initiée dans le réacteur et une température dans celui-ci maintenue à 70-85°C, en ajoutant simultanément la solution aqueuse de l'initiateur de l'étape (B) et la solution de monomère mélangés de l'étape (C) dans le réacteur, en arrêtant l'agitation une fois l'ajout terminé, en vieillissant le système de réaction pendant une période de temps appropriée, en le refroidissant, en ajustant son pH à une valeur désirée et en le filtrant, obtenant ainsi le copolyacrylate nanométrique, à base d'eau, à distribution étroite de poids moléculaire ;
dans lequel, à l'étape (A), la partie appropriée de la quantité prescrite pour l'eau est de 70-90 % en poids et la quantité égale à la partie de la quantité prescrite pour l'émulsifiant est de 45-55 % en poids.

2. Le copolyacrylate nanométrique, à base d'eau, à distribution étroite de poids moléculaire selon la revendication 1, dans lequel les matériaux à partir desquels le copolyacrylate nanométrique, à base d'eau, à distribution étroite de poids moléculaire est synthétisé incluent en outre un ester hétérocyclique ou un ester à longue chaîne de carbone en tant que monomère fonctionnel.

3. Le copolyacrylate nanométrique, à base d'eau, à distribution étroite de poids moléculaire selon la revendication 2, dans lequel l'ester hétérocyclique est présent à un pourcentage en poids inférieur à 5 %, et l'ester à longue chaîne de carbone est présent à un pourcentage en poids inférieur à 5 %.

4. Le copolyacrylate nanométrique, à base d'eau, à distribution étroite de poids moléculaire selon la revendication 3, dans lequel l'ester hétérocyclique est choisi parmi un ou plusieurs acrylate d'isobomyle et méthacrylate d'isobomyle, et l'ester à longue chaîne de carbone est choisi parmi un ou plusieurs l'acrylate d'acide phosphorique, l'acrylate de dodécyle et l'acrylate d'octadécyle.

5. Le copolyacrylate nanométrique, à base d'eau, à distribution étroite de poids moléculaire selon l'une des revendications 1 à 4, dans lequel le copolyacrylate nanométrique, à base d'eau, à distribution étroite de poids moléculaire a une teneur en solide de >30 % en poids.

6. Un procédé de préparation d'un copolyacrylate nanométrique, à base d'eau, à distribution étroite de poids moléculaire, comprenant les étapes suivantes :
(A) ajouter un émulsifiant dans une quantité égale à une partie d'une quantité prescrite pour l'émulsifiant à de l'eau dans une quantité égale à une partie appropriée d'une quantité prescrite pour l'eau dans un réacteur, former une solution aqueuse de l'émulsifiant en remuant le mélange jusqu'à ce que l'émulsifiant soit complètement dissous, chauffer la solution aqueuse à 70-85 °C et la maintenir à la température ;
(B) ajouter successivement l'eau dans une quantité égale à la partie restante de la quantité prescrite pour l'eau et un initiateur dans une quantité prescrite pour l'initiateur dans un récipient et obtenir une solution aqueuse de l'initiateur en remuant le mélange jusqu'à ce que l'initiateur soit complètement dissous ;
(C) mélanger de manière homogène les monomères de base ajoutés en quantités prescrites respectives dans un récipient, en y ajoutant l'émulsifiant en une quantité égale à la partie restante de la quantité prescrite pour l'émulsifiant et en obtenant une solution de monomère mélangés en remuant lentement le mélange jusqu'à ce que les monomères de base soient complètement dissous ; et
(D) avec une agitation initiée dans le réacteur et une température dans celui-ci maintenue à 70-85 °C, en ajoutant simultanément la solution aqueuse de l'initiateur de l'étape (B) et la solution de monomère mélangés de l'étape (C) dans le réacteur, en arrêtant l'agitation une fois l'ajout terminé, en vieillissant le système de réaction pendant une période de temps appropriée, en le refroidissant, en ajustant son pH à une valeur désirée et en le filtrant, obtenant ainsi le copolyacrylate nanométrique, à base d'eau, à distribution étroite de poids moléculaire,
dans lequel, les monomères de base à l'étape (C) incluent le méthacrylate de méthyle, l'acide méthacrylique et l'acrylate de butyle ;
et dans lequel le copolyacrylate nanométrique, à base d'eau, à distribution étroite de poids moléculaire a une taille de particule D50 de 40-65 nm et un indice de polydispersité (PDI) (Mw/Mn) de < 1,05, dans lequel la taille de particule D50 et l'indice de polydispersité (PDI) (Mw/Mn) sont déterminés par un analyseur de taille de particule à laser Malvern et un analyseur de potentiel zêta.

7. Le procédé selon la revendication 6, dans lequel à l'étape (A), la partie appropriée de la quantité prescrite pour l'eau est de 70 à 90 % en poids et la quantité égale à la partie de la quantité prescrite pour l'émulsifiant est de 45 à 55 % en poids.

8. Le procédé selon la revendication 6, dans lequel à l'étape (C), la période de vieillissement appropriée est de 2±0,5 heures.

9. Le procédé selon la revendication 6, dans lequel à l'étape (D), la valeur de pH désirée est de 5 à 8.

10. Le procédé selon la revendication 6, dans lequel à l'étape (C), les matériaux à partir desquels le copolyacrylate nanométrique, à base d'eau, à distribution étroite de poids moléculaire est synthétisé incluent en outre un ester hétérocyclique ou un ester à longue chaîne de carbone en tant que monomère fonctionnel.

11. Le procédé selon la revendication 10, dans lequel l'ester hétérocyclique est présent à un pourcentage en poids inférieur à 5 %, et l'ester à longue chaîne de carbone est présent à un pourcentage en poids inférieur à 5 %.

12. Utilisation du copolyacrylate nanométrique, à base d'eau, à distribution étroite de poids moléculaire de l'une quelconque des revendications 1 à 5 comme résine à base d'eau.

13. L'utilisation selon la revendication 12, dans laquelle le copolyacrylate nanométrique, à base d'eau, à distribution étroite de poids moléculaire est utilisé dans la préparation d'une encre entièrement à base d'eau.
